# DEMANDE DE BREVET EUROPEEN

(11) **EP 1 686 759 A1**
(43) Date de publication de la demande: **02.08.2006**
(21) Numéro de dépôt: 06100912.2
(22) Date de dépôt: 26.01.2006
(51) Int. Cl.: H04L 29/06, H04L 12/28

(54) **Procédé et système pour la connexion d'un équipement de traitement de données par un module d'interconnexion à un réseau sans fil**

(30) Priorité: 26.01.2005 FR 0500813
(71) Demandeur: Guillemot Corporation, 35135 Chantepie (FR)
(72) Inventeur: Gasnier, Bertrand, 56380 Porcaro (FR)
(74) Mandataire: Roussel, Eric Marcel Henri

(57) **Abrégé**

L'invention concerne un procédé de mise en oeuvre d'une connexion pour un équipement de traitement de données (100) par au moins un module d'interconnexion (200) à au moins un réseau sans fil (400) comportant au moins un point (500) d'accès, dans lequel un système de balayage (206) du module d'interconnexion (200) détecte des premières informations émises par ledit au moins un point (500) d'accès.

Suivant l'invention, il est prévu
une identification du point d'accès auquel l'utilisateur souhaite se connecter, par recoupement, effectué par un dispositif d'assistance à la connexion (609), des premières informations détectées avec au moins une deuxième information de point d'accès de l'utilisateur, fournie au dispositif d'assistance à la connexion (609) par saisie par l'utilisateur de ladite deuxième information,
une sélection du point d'accès identifié en vue de la connexion du module d'interconnexion (200) au réseau par ce point d'accès sélectionné.

## Description

La présente invention se rapporte au domaine des réseaux sans-fil, communiquant notamment, mais non exclusivement, selon la norme IEEE 802.11 (norme de l'«Institute of Electrical and Electronics Engineers »).

Plus précisément l'invention concerne un dispositif simplifié d'installation et de mise en réseau pour des équipements de traitement de données notamment, mais non exclusivement, des ordinateurs personnels, des PDAs (pour « Personal Digital Assistant » en Anglais).

Les dispositifs de mise en réseau ont initialement été conçus pour des réseaux d'entreprises. Les fabricants desdits dispositifs de mise en réseau fournissent habituellement un module d'interconnexion accompagné d'interfaces de configuration et de paramétrage qui proposent en même temps à l'utilisateur de multiples choix ou options y compris au début de l'installation. Ces interfaces n'assistent pas l'utilisateur dans l'entrée des paramètres et n'offrent pas d'outil automatisant certaines phases de la connexion en particulier l'activation/désactivation de l'émission et de la réception de données par le module d'interconnexion.

La mise en oeuvre d'un réseau sans fil pose donc des difficultés au consommateur non-initié car les réseaux sans fil intègrent de multiples paramètres, des concepts techniques et un vocabulaire spécifique. La configuration est rendue difficile car le consommateur ne dispose pas des informations au moment où il en a besoin et a des difficultés à distinguer les choix qu'il doit effectuer et à quel moment les effectuer.

D'une manière générale, il faut permettre à l'utilisateur (le consommateur non-initié) d'installer rapidement un module d'interconnexion tout en préservant ses qualités d'émission et de réception et de le configurer facilement pour créer un réseau sans fil ou établir la connexion à un réseau existant.

Il faut également s'efforcer de fournir au consommateur un outil simple le guidant pas à pas pour la mise en réseau sans fil de ses équipements informatiques, ou pour établir une connexion aux réseaux existants que ce soit en mode Infrastructure ou en mode Ad hoc car même si les réseaux sans fil sont gérés le plus souvent en mode Infrastructure, le mode Ad hoc conserve son intérêt.

Un des problèmes posés par les manuels d'utilisateur existants est que l'utilisateur ne connaît pas le nom du réseau réel auquel il souhaite se connecter, d'où une grande difficulté de se connecter à l'un d'entre eux en se servant du manuel, cette difficulté étant accrue lorsque plusieurs noms possibles de réseaux sont affichés par l'interface de configuration.

L'invention vise à résoudre ce problème et à fournir un outil simple pour configurer son module d'interconnexion et établir une connexion.

A cet effet, l'invention prévoit un procédé selon la revendication 1 et un système selon la revendication 8.

Les autres revendications concernent des modes de réalisation de l'invention.

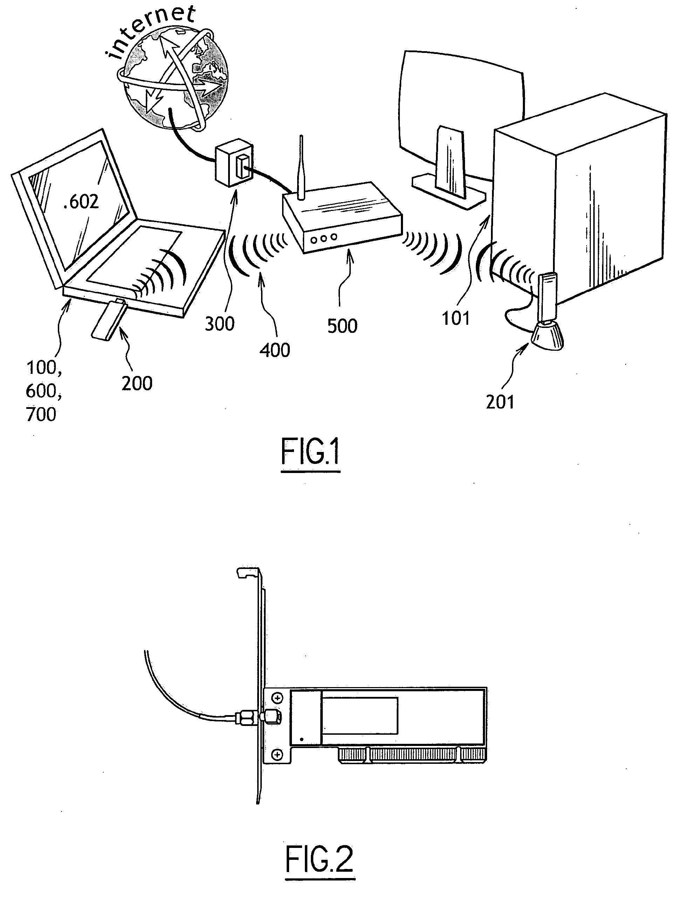

Les dessins annexés illustrent l'invention, à titre d'exemples :
- On présente avec la figure 1, un schéma d'un réseau sans fil dans un mode de fonctionnement de type Infrastructure, connu en soi. Ce réseau comprend :
   - un ordinateur personnel portable 100 disposant d'un module d'interconnexion externe 200 branché sur un port de type USB (pour « Universal Serial Bus » en Anglais) dudit ordinateur personnel portable ;
   - un point d'accès 500 se présentant ici sous la forme d'un modem-routeur branché au réseau Internet par le biais d'un câble et d'une prise téléphonique 300 ;
   - un ordinateur personnel fixe 101 représenté ici avec un écran et une unité centrale de type «tour»;
   - un module d'interconnexion externe201, ledit module se reliant sur un port USB de cet ordinateur personnel fixe 101 1 via un câble et une prise USB.
- les figures 2 et 3 présentent des illustrations d'un mode de réalisation d'un module d'interconnexion 200 pour un port PCI (pour « Peripheral Component Interconnect » en Anglais) d'un équipement tiers 100 (représenté ici équipé d'une antenne déportée 202). ;
- la figure 4 présente un module d'interconnexion 200 pour un port PCMCIA (pour « Personal Computer Memory Card International Association » en Anglais) d'un équipement tiers 200 ;

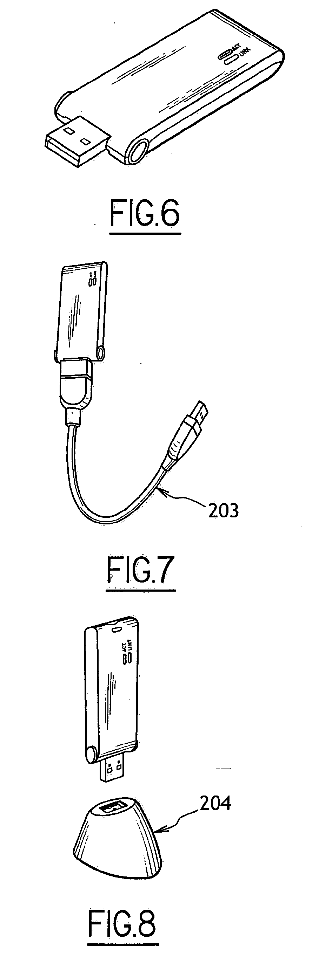

- la figure 5 présente un module d'interconnexion 200 pour un port PCMCIA d'un équipement tiers 200 après installation matérielle dans ledit port PCMCIA ;
- la figure 6 présente un module d'interconnexion 200 pour un port USB d'un équipement tiers 100 ;
- la figure 7 présente un module d'interconnexion 200 pour un port USB d'un équipement tiers muni d'une rallonge USB servant également de rallonge d'antenne 203 ;
- la figure 8 présente un module d'interconnexion 200 pour un port USB, une base de connexion déportée 204 ;
- la figure 9 présente un module d'interconnexion 200 pour un port USB connecté sur une base de connexion déportée 204 munie d'un câble de connexion 205 relié au port USB de l'équipement tiers (ledit câble servant également de rallonge d'antenne).

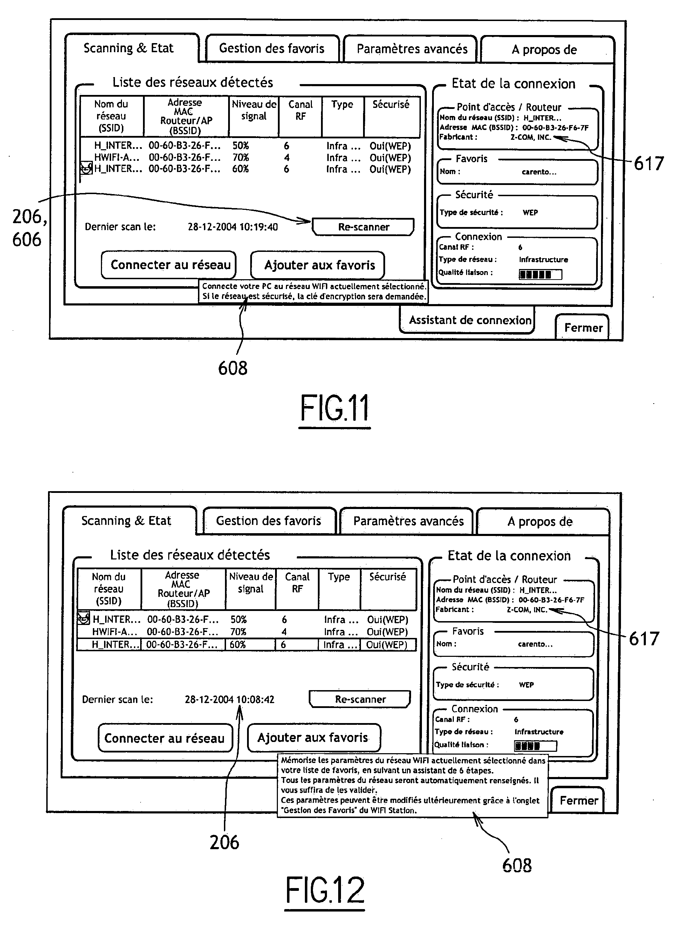

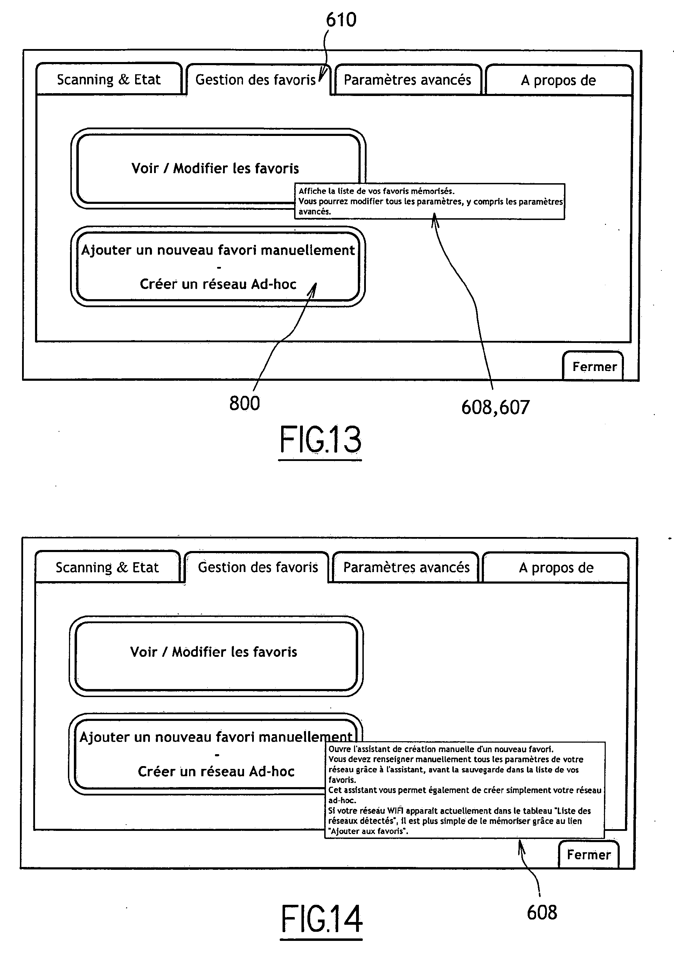

- Les figures 10 à 14 constituent des exemples non-limitatifs illustrant un mode de réalisation dudit dispositif d'assistance.

Il est prévu un module d'interconnexion 200 comportant un logiciel client 600 d'interface. Ils sont destinés à coopérer avec des équipements tiers 100 qui possèdent des éléments matériels d'interface homme-machine (dispositif de visualisation, dispositif d'émission de son, dispositif de pointage...). L'équipement tiers 100 peut notamment être un ordinateur personnel (PC). Le logiciel client 600 peut être hébergé soit dans le module d'interconnexion 200 soit sur un support apte à être lu par l'équipement tiers ainsi que représenté (y compris la mémoire de l'équipement tiers 100 dans le cas du téléchargement du logiciel client ou de ses instructions).

On rappelle que les équipements tiers 100 hébergent et exécutent un logiciel principal communément appelé « système d'exploitation » qui assure notamment des fonctions de traitement de données et de pilotage des divers éléments matériels et périphériques de l'équipement tiers.

La mise en oeuvre d'une connexion à un réseau sans-fil 400 comporte trois phases principales : l'installation, la configuration et l'utilisation.

La phase d'installation comprend (si le module d'interconnexion 200 n'est pas déjà relié) le branchement du module d'interconnexion 200 à l'équipement tiers 100 et l'installation de ses pilotes, l'installation du logiciel client 600.

La phase de configuration correspond au paramétrage de la connexion à établir.

La phase d'utilisation comprend notamment, mais non exclusivement, l'optimisation de l'établissement des futures connexions et en particulier leur accélération par une automatisation, la gestion des réseaux favoris, l'activation et la désactivation de la liaison au réseau.

Selon une caractéristique particulière, la phase d'installation commence par l'installation du logiciel client 600.

Selon une caractéristique particulière, le logiciel client 600 est fourni sur un support de données compatible avec au moins l'un des dispositifs de lecture de l'équipement tiers 100. Après lecture du support par ledit dispositif de lecture, une application logicielle se lance automatiquement pour effectuer l'installation du logiciel client 600.

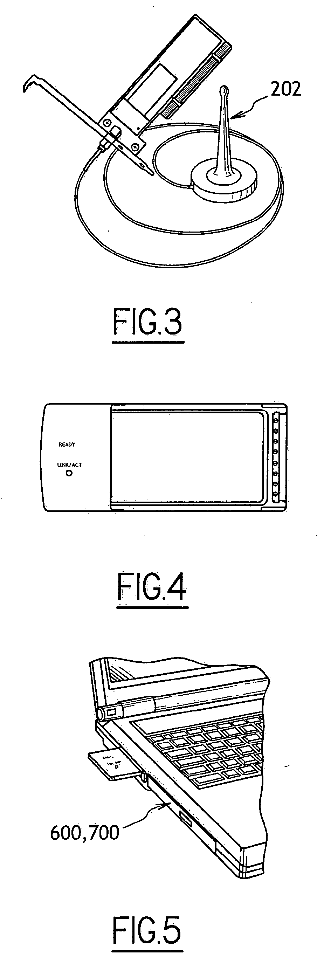

Selon un mode particulier de réalisation de l'invention, le module d'interconnexion 200 peut être pré-intégré dans l'équipement tiers 100. A titre d'exemple non-limitatif, le fabricant ou intégrateur de l'équipement tiers peut y avoir inclut un module d'interconnexion de type PCI représenté figures 2 et 3.

Selon un autre mode particulier de réalisation de l'invention, le module d'interconnexion 200 n'est pas préalablement intégré dans l'équipement tiers 100 et la phase d'installation nécessite le branchement dudit module à l'un des connecteurs (port PCI, port USB, ou port PCMCIA) libres de l'équipement tiers 100.

Selon une caractéristique particulière de l'invention, le module d'interconnexion 200 comporte une antenne déportée 202, 203 ou 205 (selon la nature de l'équipement tiers 100 et ses ports de branchement disponibles pour le module d'interconnexion 200) c'est-à-dire non-intégrée dans le module d'interconnexion 200. La présence de ladite antenne est particulièrement avantageuse pour les modules d'interconnexion internes (par exemple un module d'interconnexion se connectant sur un port PCI).

Selon une caractéristique particulière, la phase d'installation commence par l'installation du logiciel client 600 puis le branchement du module d'interconnexion 200 et la détection du module d'interconnexion 200 par l'équipement tiers 100 par le biais soit du système d'exploitation soit du logiciel client 600.

Selon une caractéristique particulière, l'installation du logiciel client 600 est guidée par un assistant d'installation 601 donnant les instructions devant être suivies par l'utilisateur.

Selon une caractéristique particulière, la phase d'installation se poursuit par une étape de recherche des réseaux existants par balayage des émissions desdits réseaux puis une étape d'interrogation des réseaux détectés. Le module d'interconnexion 200 comporte un système de balayage 206 pour la détection des émissions et informations du ou des points d'accès 500 au(x) réseaux sans fil 400. Le module d'interconnexion 200 est apte à transmettre au point d'accès 500 (en mode Infrastructure) ou à un autre équipement (en mode Ad hoc) des commandes pour l'exécution d'actions prédéterminées. Pour plus de précision, on pourra se référer aux normes IEEE 802.11.

Selon une caractéristique particulière, le logiciel client 600 affiche une interface 602 sur un dispositif de visualisation de l'équipement tiers 100.

Selon une caractéristique particulière, le logiciel client 600 contrôle les émissions et réceptions de données du module d'interconnexion 200.

Selon une caractéristique particulière, le logiciel client 600 crée une zone d'affichage de l'état de la connexion et des paramètres du réseau détecté (nom du réseau, adresse MAC, Fabricant, Favori (si le réseau fait partie des favoris déjà enregistrés de l'utilisateur), type de sécurité, canal, type de réseau, qualité de liaison).

Selon une caractéristique particulière, lorsqu'un terme technique doit être utilisé, l'information est donnée en langage clair compréhensible par tout néophyte et le terme technique de référence figure entre parenthèse. A titre d'exemple, le « SSID » (Service Set Identifier en Anglais, identifiant d'ensemble de service en Français) est le nom unique partagé par les clients et le point d'accès d'un réseau sans-fil. La notion de SSID pouvant s'avérer difficile à comprendre par les néophytes, elle a été transcrite comme suit : « nom du réseau (SSID) ».

Selon une caractéristique particulière, ladite interface graphique 602 comporte au moins deux onglets : un onglet d'information sur les réseaux détectés et de connexion, un onglet concernant la gestion des favoris. Selon un mode préféré de réalisation de l'invention, l'onglet de connexion et d'information sur les réseaux détectés constitue la fenêtre d'accueil par défaut du logiciel client 600.

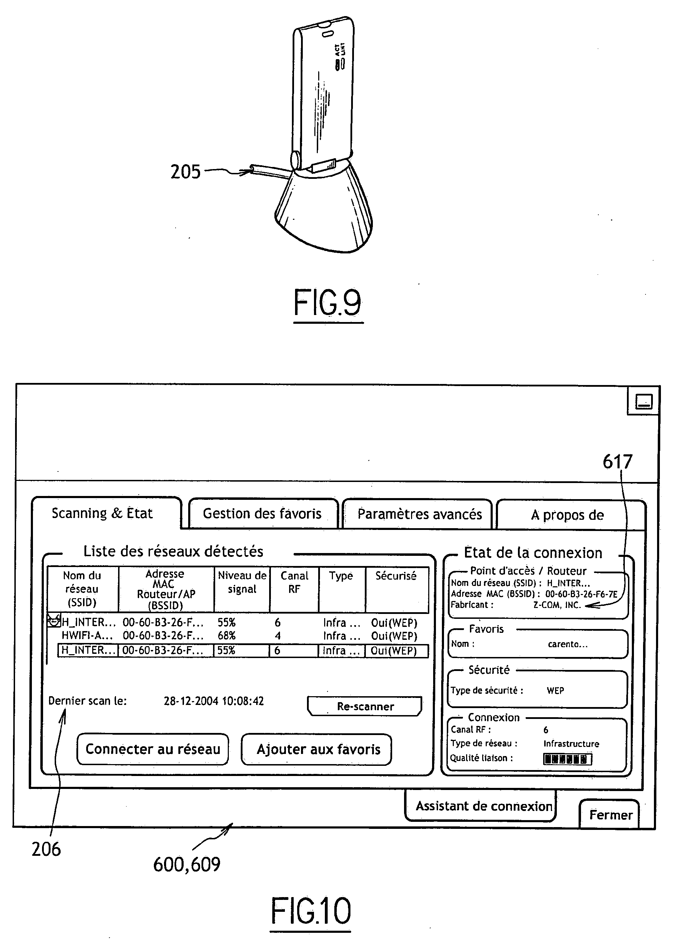

La figure 10 présente un exemple illustratif d'un mode de réalisation préférentiel de ladite interface graphique 602.

Selon une caractéristique particulière, la phase d'installation comporte une phase automatique 603 en ce qu'en parallèle à l'affichage de ladite interface graphique, le processus de connexion commence par l'instruction donnée automatiquement par le logiciel client 600 au module d'interconnexion 200 de lancer la recherche du ou des réseaux 400 existants.

Selon une caractéristique particulière, durant ladite recherche, un élément visuel et/ou sonore indique à l'utilisateur que la recherche est en cours.

Selon une caractéristique particulière, à l'issue de ladite recherche, un élément visuel et/ou sonore indique à l'utilisateur que la recherche est achevée.

Selon une caractéristique particulière, à l'issue de ladite recherche, un élément visuel et/ou sonore indique à l'utilisateur le ou les résultat(s) de la recherche.

Selon une caractéristique particulière, le logiciel client 600 affiche une icône 604 dans l'interface graphique 602 du système d'exploitation. Selon un mode particulier de réalisation, l'interface graphique 602 du logiciel client 600 peut être réduite par l'utilisateur à la seule icône 604, l'activation de cette icône 604 (par exemple par un double clic sur cette icône) permettant alors la restauration de l'interface graphique 602 du logiciel client 600.

Selon une caractéristique particulière, un code de couleur 605 correspond à l'état de la connexion au réseau sélectionné. A un état de la connexion du réseau sélectionné correspond une couleur prédéterminée. A titre d'exemple non-limitatif :
- si l'icône est de couleur **verte,** une connexion au réseau est établie, la force du signal est excellente ;
- Si l'icône est de couleur **jaune,** une connexion au réseau est établie, la force du signal est bonne ;
- Si l'icône est de couleur **rouge,** une connexion au réseau est établie, la force du signal est faible ;
- Si l'icône est de couleur **grise,** le module d'interconnexion est détecté, mais il n'est connecté à aucun réseau ;
- Si l'icône est de couleur **noire,** le module d'interconnexion n'est pas détecté.

Selon une caractéristique particulière, l'information correspondant à l'état de la connexion est fournie par la couleur de l'icône 604 du logiciel client 600 et/ou par un signal visuel du module d'interconnexion 200.

Selon une caractéristique particulière, le logiciel client 600 comporte une application 606 permettant à tout moment d'envoyer une instruction au module d'interconnexion d'effectuer une recherche du ou des réseaux existants.

Selon une caractéristique particulière, l'interface graphique 602 du logiciel client 600 affiche tous les réseaux 400 détectés et invite l'utilisateur à sélectionner l'un de ces réseaux en vue de s'y connecter.

Selon une caractéristique particulière, l'interface graphique 602 comporte un affichage des réseaux présentée sous forme de tableaux indiquant le mode de chaque réseau (Infrastructure / Ad hoc), l'adresse MAC (Message Authentication Code en Anglais) qui est une adresse créée par le constructeur du module d'interconnexion ou du point d'accès (routeur), le canal, le type de réseau (sécurisé ou non-sécurisé). Si le réseau sélectionné est sécurisé, le logiciel client 600 demande à l'utilisateur la clé de sécurité à ce réseau. Lorsque la connexion au réseau sélectionné échoue en mode Infrastructure sécurisé par une clé WEP (pour « Wired Equivalent Privacy » en Anglais), un message prévient l'utilisateur que la clé de sécurité WEP n'est pas correcte.

Selon une caractéristique particulière, le logiciel client 600 comprend un dispositif d'aide à la décision 607 : à chaque passage du pointeur de souris (ou autre dispositif de pointage) sur un dispositif d'action pour l'utilisateur, notamment mais non exclusivement, un bouton, onglet, zone d'entrée de données, le logiciel client 600 fait apparaître ou remplit une zone d'information 608 indiquant à l'utilisateur l'usage dudit dispositif d'action et/ou les conseils associés à son activation. Afm de ne pas surcharger l'utilisateur d'informations, ces informations disparaissent lorsque ledit pointeur s'éloigne dudit dispositif d'action.

Selon une caractéristique particulière, ladite zone d'information 608 contient le cas échéant un avertissement pour prévenir les mauvais choix de l'utilisateur.

Selon une caractéristique particulière pour la phase de configuration, le logiciel client 600 inclut au moins un dispositif d'assistance à la connexion 609 : l'interface graphique 602 comporte un dispositif tel qu'un bouton virtuel proposant à l'utilisateur le lancement d'un assistant de connexion. Lorsque l'utilisateur active cet assistant de connexion, ce dernier affiche un message du type « Si vous connaissez le nom de votre réseau (SSID), sélectionner-le simplement dans la liste des réseaux détectés puis cliquer sur « CONNECTER AU RESEAU ». Si vous ne le connaissez pas, saisissez simplement les 6 premiers caractères de l'adresse MAC de votre point d'accès (routeur) présente généralement sous ce produit » et une zone à remplir. Le module d'interconnexion 200 ou le logiciel client 600 ainsi que représenté contient (ou dispose d'un accès à) au moins une base de données 700 contenant des informations sur les matériels accomplissant la fonction de point d'accès 500 ce qui lui permet le plus souvent d'identifier le point d'accès 500 de l'utilisateur à partir de ces 6 premiers caractères. Le module d'interconnexion 200 comporte un système de balayage 206 pour la détection des émissions et informations du ou des points d'accès 500 au(x) réseaux sans fil 400, y compris l'adresse MAC des point(s) d'accès du ou de(s) des réseaux sans fil 400 détectés. L'entrée des premiers caractères de l'adresse MAC du point d'accès 500 auquel l'utilisateur souhaite se connecter (les 6 premiers caractères selon un mode préféré de réalisation) par l'utilisateur permet d'identifier le point d'accès 500 auquel l'utilisateur souhaite de connecter par recoupement parmi les premiers caractères des adresses MAC du ou des point(s) d'accès du ou des réseau(x) détecté (s). Si le recoupement n'a pas permis d'identifier un unique point d'accès dont l'adresse MAC comporte lesdits premiers caractères (par exemple, si le module d'interconnexion 200 a détecté plusieurs points d'accès 500 dont l'adresse MAC comporte les mêmes premiers caractères), le dispositif d'assistance à la connexion 609 invitera l'utilisateur à entrer tout ou partie des caractères suivants de l'adresse MAC. Par exemple, une fenêtre apparaîtra demandant à l'utilisateur d'entrer les six derniers caractères de l'adresse MAC. Ceci permet d'éviter à l'utilisateur d'identifier et d'entrer une longue série de caractères. Même dans le cas où le recoupement n'a pas permis d'identifier un unique point d'accès, l'entrée des caractères en plusieurs fois diminue le risque d'erreur car il est plus facile de remarquer une erreur dans une courte série de caractères. Si l'utilisateur ne connaît pas le nom du réseau 400 auquel il souhaite se connecter ou n'arrive pas à le retrouver parmi les réseaux détectés, l'utilisateur ira naturellement vers le point d'accès 500 le plus proche et y cherchera son adresse MAC qui permettra de se connecter à ce point d'accès et de l'utiliser. Si le réseau est sécurisé, l'assistant de connexion demandera en sus la clé de sécurité de ce réseau nécessaire pour y accéder.

Selon une caractéristique particulière, pouvant être prévue indépendamment, le logiciel client 600 comprend un dispositif d'information 617 sur le fabricant du point d'accès 500. Plus précisément, la base de données 700 contient au moins une liste des matériels accomplissant la fonction de point d'accès 500 avec leur OUI (pour « Organizationally Unique Identifier » en Anglais) et le nom de leur fabricant. L'adresse MAC des matériels est issue de ce numéro OUI (les premiers caractères d'une adresse sont le numéro OUI et les caractères suivants sont un identifiant du produit créé par le fabricant du matériel). Le logiciel client 600 affiche les paramètres du réseau auquel l'utilisateur est connecté (nom du réseau, adresse MAC, Fabricant, Favori (si le réseau fait partie des favoris déjà enregistrés de l'utilisateur), type de sécurité, canal, type de réseau, qualité de liaison). L'information relative au fabricant consiste en le nom ou la marque du point d'accès 500. Cette information est obtenue par une recherche des caractères de l'adresse MAC du point d'accès 500 dans la base de données 700. Cette information permet à l'utilisateur de vérifier que le réseau sans fil 400 auquel il est connecté est bien celui auquel il souhaitait se connecter. Il est ainsi effectué la recherche de l'information de fabricant dans la base de données à partir de paramètres du réseau auquel le module d'interconnexion est connecté et l'affichage de cette information de fabricant.

Selon une caractéristique particulière, afin d'accélérer les futures connexions, l'invention comporte une dispositif 800 de mémorisation des paramètres des réseaux utilisés par l'utilisateur. Le logiciel client 600 offre à l'utilisateur la possibilité de sélectionner un réseau 400 et de le conserver en mémoire en vue de s'y connecter automatiquement à l'avenir dès le lancement de l'interface logicielle 602. Cette mémorisation est réalisée par l'activation d'un dispositif d'action tel que par exemple, un bouton portant une mention du type « AJOUTER AUX FAVORIS » présent sur l'interface graphique. L'activation de ce bouton déclenche l'exécution de l'assistant de création d'un nouveau favori décrit ci-après.

Selon une caractéristique particulière, le logiciel client inclut un assistant de gestion des favoris 610 qui permet de garder en mémoire, de manière simple, les paramètres d'un réseau 400, ou de voir ou modifier des favoris existants (un favori est un ensemble de paramètres de connexion à un réseau Infrastructure ou Ad hoc connu (celui de l'utilisateur, celui d'un de ses voisins, d'un de ses amis)). Selon une caractéristique particulière, cet assistant 610 renseigne un maximum de zones d'entrées de données avec les informations provenant soit de base(s) de données, soit des paramètres du réseau 400 détectés par le module d'interconnexion 200 et transmis au logiciel client 600, soit des informations préalablement renseignées par l'utilisateur. Cet assistant 610 simplifie l'ajout de réseaux aux « favoris » de l'utilisateur en renseignant automatiquement certaines zones d'entrées de données 611. Il ne reste plus à l'utilisateur qu'à rentrer les informations suivantes : le nom du favori, la clé de sécurité si le réseau est sécurisé, la connexion automatique ou non au réseau.

Selon une caractéristique particulière, les assistants 609 et 610 du logiciel client 600 proposent à chaque étape à l'utilisateur une solution par défaut. Par exemple, pour le choix du mode de réseau, le mode par défaut sera le mode Infrastructure car c'est le plus communément utilisé et le plus facile à mettre en oeuvre.

Selon une caractéristique particulière, pour simplifier les décisions de l'utilisateur, l'onglet de gestion des favoris propose à l'utilisateur de choisir entre soit voir et/ou modifier ses favoris soit ajouter un nouveau favori manuellement ou créer un réseau Ad hoc. Dans un réseau Ad hoc, la création d'un favori équivaut à créer réellement la liaison sans fil entre les ordinateurs.
- Si l'utilisateur choisit de voir et/ou modifier ses favoris, une grande fenêtre apparaît qui contient un tableau d'informations listant les favoris déjà enregistrés par l'utilisateur. Ce tableau indique le nom assigné par l'utilisateur à chaque réseau, le mode de chaque réseau (Infrastructure / Ad hoc), l'adresse MAC (adresse créée par le constructeur du module d'interconnexion ou du point d'accès (routeur)), le canal, le type de réseau (sécurisé ou non-sécurisé). Cette fenêtre offre en outre à l'utilisateur le choix entre :
   o supprimer un favori de la liste (en le sélectionnant dans le tableau et en activant un bouton portant une mention du type « SUPPRIMER ») ;
   o modifier les paramètres de base, de sécurité ou les paramètres avancés des réseaux déjà enregistrés dans les favoris (en le sélectionnant dans le tableau et en activant un bouton portant une mention du type « MODIFIER ») ;
   o se connecter à un réseau enregistré dans les favoris (en le sélectionnant dans le tableau et activant un bouton portant une mention du type « CONNECTER AU RESEAU »)
   o Fermer la fenêtre (en activant un bouton portant une mention du type « QUITTER »).

Selon une caractéristique particulière, la sélection de l'un des favoris dans la liste et l'activation du bouton portant une mention du type « MODIFIER » va faire apparaître une nouvelle fenêtre affichant les données enregistrées. Les paramètres modifiables par l'utilisateur apparaissent soit dans des cases à remplir, soit dans des menus déroulants 612.
- Si l'utilisateur choisit d'ajouter un nouveau favori manuellement ou créer un réseau Ad hoc, une grande fenêtre apparaît donnant un choix à l'utilisateur entre deux possibilités : soit utiliser l'assistant de création d'un nouveau favori (décrit ci-dessous) soit ajouter un nouveau favori manuellement ou créer un Ad hoc. Si l'utilisateur choisit d'ajouter un nouveau favori manuellement ou créer un Ad hoc, une procédure en 6 étapes commence :
   o Etape 1 : l'utilisateur est invité à entrer le nom du favori.
   o Etape 2 : l'utilisateur est invité à donner le nom du réseau (le nom est pré-renseigné si l'utilisateur a accédé à cet outil manuel via le bouton « AJOUTER AUX FAVORIS ») évoqué ci-avant.
   o Etape 3 : l'utilisateur est invité à choisir l'architecture réseau parmi les modes Infrastructure et Ad hoc, l'architecture Infrastructure étant proposé par défaut. Un texte d'information et un schéma montrent à l'utilisateur les différences entre les deux modes.
   o Etape 4 : l'utilisateur est invité à indiquer si le réseau est sécurisé ou non. Par défaut, la case « NON » est pré-renseignée. Si le réseau auquel il souhaite accéder est sécurisé, l'utilisateur doit cocher la case « OUI » et rentrer la clé de sécurité de ce réseau. L'utilisateur doit également sélectionner dans un menu déroulant le type de clé de sécurité. Le logiciel aide l'utilisateur en lui indiquant à quoi correspond chacun des types de clé.
   o Etape 5 : l'utilisateur est invité à choisir entre une connexion automatique ou non à ce réseau dès lors qu'il est détecté. Par défaut, la case « OUI » est pré-renseignée.
   o Etape 6 : un résumé des paramètres entrés par l'utilisateur apparaît. L'utilisateur peut sauver le favori ainsi défini en activant un bouton virtuel portant une mention du type « ENREGISTRER ».
   En mode Infrastructure, si le réseau n'est pas détecté, ou si la connexion à ce réseau est déjà effectuée, le réseau est simplement enregistré dans la liste des favoris ; si le réseau est détecté, mais que la connexion n'est pas déjà établie, une boîte de dialogue propose à l'utilisateur de s'y connecter. En mode Ad hoc, si le réseau n'est pas détecté, une boîte de dialogue propose à l'utilisateur d'activer le réseau ; si l'utilisateur est déjà connecté au réseau, le réseau est simplement enregistré dans la liste des favoris ; Si le réseau est détecté, mais que l'utilisateur n'y est pas connecté actuellement, une boîte de dialogue lui propose de s'y connecter.

L'utilisateur a la possibilité de naviguer au sein de cette procédure manuelle au moyen de boutons de type « SUIVANT » (pour passer à l'étape suivante), « RETOUR » (pour revenir à l'étape précédente) et « ANNULER » (pour quitter la procédure). A l'étape n°6 deux boutons supplémentaires « ENREGISTRER » et « ENREGISTRER ET CONNECTER » apparaissent.

Selon une caractéristique particulière, le logiciel client 600 comporte un dispositif de réduction 613 permettant de réduire la taille de l'interface graphique 602 du logiciel client. Selon un mode de réalisation dudit dispositif de réduction, l'activation d'un bouton portant une mention du type « FERMER » déclenche l'instruction de faire passer l'interface graphique du logiciel client en arrière-plan visuel des tâches effectuées par l'équipement tiers 100 et des fenêtres affichées par le système d'exploitation présent sur l'équipement tiers 100 mais le logiciel client 600 reste actif. Cette fonction permet à l'utilisateur d'effectuer les tâches nécessitant la connexion au réseau sans fil 400 sans que l'interface graphique 602 soit visible à l'écran. Selon un mode particulier de réalisation, lorsque l'interface graphique 602 est fermée mais que le logiciel client 600 est actif, l'icône 604 du logiciel client reste visible et active.

Selon une caractéristique particulière, le logiciel client 600 comporte une application 614 permettant de désactiver l'émission et la réception de données par le module d'interconnexion 200. L'avantage de cette application 614 est ici d'effectuer la désactivation en deux actions rapides car il suffit à l'utilisateur d'activer le logiciel client 600 (par exemple en cliquant sur l'icône 604) puis sur un bouton portant une mention du type « DESACTIVER ». A titre d'illustration, l'action de « cliquer » sur ladite icône fait apparaître un menu affiché à l'écran offrant notamment mais non exclusivement à l'utilisateur le choix de désactiver la connexion au(x) réseau(x). De même, pour réactiver l'émission et la réception de données par le module d'interconnexion 200, il suffit à l'utilisateur de cliquer sur le bouton portant une mention du type « ACTIVER ». Les réseaux non sécurisés présentent l'inconvénient d'exposer leurs utilisateurs à des intrusions. Ce dispositif 614 permet d'éviter toute intrusion dans l'équipement tiers lorsque l'émission et la réception de données par le module d'interconnexion ont été désactivés.

Selon un mode particulier de réalisation, l'icône 604, lorsqu'elle est activée ouvre un menu offrant à l'utilisateur le choix entre « ACTIVER » ou « DESACTIVER » la connexion ou « LANCER LE LOGICIEL CLIENT » ou « FERMER LE LOGICIEL CLIENT ». Lorsque l'option « ACTIVER » est choisie, l'application envoie au module d'interconnexion un signal d'activation. Lorsque l'option « DESACTIVER » est choisie par l'utilisateur, l'application 614 envoie au module d'interconnexion un signal d' des émissions et la réceptions de données par du module d'interconnexion 200. Lorsque l'option « LANCER LE LOGICIEL CLIENT » est activée, l'application 614 envoie une instruction de lancement au programme du logiciel client 600. Lorsque l'option « FERMER LE LOGICIEL CLIENT » est activée par l'utilisateur, l'application 614 envoie une instruction de fermeture au programme du logiciel client 600.

Selon une caractéristique particulière, le logiciel client 600 comprend une application 615 pour l'économie d'énergie. En mode Infrastructure, après l'envoi et/ou la réception de données (selon le ou les paramètre(s) d'économie d'énergie choisi(s) par l'utilisateur et/ou le ou le(s) paramètre(s) par défaut du logiciel client 600) par le module d'interconnexion 200, cette application 615 envoie une instruction au module d'interconnexion 200 de se mettre en mode de basse consommation. A réception de cette instruction, l'alimentation en énergie des éléments du module d'interconnexion 200 qui ne sont pas indispensables cesse et l'alimentation en énergie de ces éléments ne reprend que lorsqu'une demande d'émission de données et/ou un signal de réception de données parvient au module d'interconnexion 500. Selon un mode particulier de réalisation, lorsqu'une case portant une mention du type « ECONOMIE D'ENERGIE » est coché dans un onglet relatif aux paramètres avancés, la désactivation du module d'interconnexion est automatique après l'envoi des données.

Selon une caractéristique particulière, l'invention inclut en outre une documentation 616 décrivant notamment comment partager des dossiers, une imprimante, une connexion ADSL (pour « Asymmetric Digital Subscriber Line » en Anglais), et contenant un glossaire des termes techniques.

Dans un mode de réalisation, les étapes suivantes sont exécutées :
a- réception par au moins un module d'interconnexion (200) d'au moins un paramètre d'identification émis par le ou les point(s) d'accès (500) à au moins un réseau sans fil (400) ;
b- recherche de recoupement(s) entre au moins un desdits paramètres d'identification émis par le ou les point(s) d'accès (500) et au moins une autre source d'informations ;
c- sélection, parmi le ou lesdits point(s) d'accès, du point d'accès correspondant au(x) recoupement(s) obtenu(s) en vue d'une connexion par ce point d'accès.

Par exemple, l'étape b- comprend au moins l'une des recherches de recoupement(s) suivantes :
- recoupement(s) entre au moins un paramètre d'identification reçu de chaque point d'accès (500) du ou des réseau(x) sans fil (400) et au moins une information fournie, directement ou indirectement, par l'utilisateur sur le point d'accès auquel il souhaite se connecter ;
- recoupement(s) entre au moins un paramètre d'identification reçu de chaque point d'accès (500) du ou des réseau(x) sans fil (400) et les informations contenues dans au moins une base de données (700) contenant un ou plusieurs paramètres d'identification des points d'accès (500) ;
- recoupement(s) entre d'une part, le résultat de la recherche d'au moins une information fournie, directement ou indirectement, par l'utilisateur sur le point d'accès auquel il souhaite se connecter dans au moins une base de données (700) contenant un ou plusieurs paramètres d'identification des points d'accès (500) et d'autre part, au moins un paramètre d'identification reçu de chaque point d'accès (500) du ou des réseau(x) sans fil (400) ;
et en ce que ledit procédé comprend en outre l'étape d- suivante :
d- communication à l'utilisateur de l'équipement de traitement de données (100) d'au moins une information identifiant le réseau auquel il est connecté et/ou au moins une information identifiant le point d'accès par lequel la connexion audit réseau est établie.

Par ailleurs, il est prévu un dispositif (800) de mémorisation des paramètres d'au moins un réseau sans fil favori et de connexion automatique audit réseau sans fil favori. Par exemple, parmi ces paramètres au moins un paramètre d'identification du point d'accès audit réseau sans fil favori et/ou au moins un paramètre d'identification dudit réseau sans fil favori a été renseigné en utilisant directement ou indirectement :
- au moins un paramètre d'identification reçu du point d'accès audit réseau sans fil favori ; et/ou
- au moins un paramètre d'identification figurant dans au moins une base de données (700) ; et/ou
- au moins une information préalablement renseignée ou saisie par l'utilisateur.

Par ailleurs, il est prévu un procédé qui comprend au moins les étapes suivantes :
■ détection d'au moins un module d'interconnexion (200) en liaison avec au moins un desdits équipements de traitement de données (100);
■ recherche des réseaux sans fil existants par au moins un module d'interconnexion (200) ;
■ affichage par au moins un des équipements de traitement de données du ou des réseaux sans fil (400) trouvés ou affichage de l'absence de réseau sans fil trouvé ;
■ option donnée à l'utilisateur d'au moins un desdits équipements de traitement de données entre sélectionner et se connecter à un réseau sans fil (400) trouvé ou mettre en oeuvre un assistant de connexion (609).

Par ailleurs, il est prévu un procédé de mise en oeuvre et de gestion de connexion(s) à au moins un réseau sans fil (400) pour des équipements de traitement de données (100) par au moins un module d'interconnexion (200) et un logiciel client 600, ledit procédé comportant une interface de visualisation (602), un dispositif de réduction (613) de l'interface de visualisation (602) en une icône (604) dont la couleur correspond à un code de couleur (605), et un dispositif d'aide à la décision (607).

Par exemple, l'interface de visualisation (602) est traduite en termes non-techniques et comprend l'utilisation d'au moins une zone pré-renseignée d'entrée de données (611, 612).

Par ailleurs, il est prévu un système de mise en oeuvre de connexion(s) à au moins un réseau sans fil (400) pour des équipements de traitement de données (100), caractérisé en ce qu'il comprend au moins un module d'interconnexion (200) coopérant avec un équipement de traitement de données (100) pour lui procurer une ou plusieurs liaisons avec au moins un point d'accès (500) à un réseau sans fil (400), un logiciel (600) d'interface entre ledit ou lesdits modules d'interconnexion et l'utilisateur via l'équipement de traitement de données, ledit logiciel comprenant au moins une base de données (700) sur les points d'accès (500), ou disposant d'un accès à au moins une base de données (700) contenant un ou plusieurs paramètres d'identification des points d'accès (500). Par exemple, ledit logiciel client (600) comporte un dispositif (615) d'économie d'énergie.

Par exemple, ledit logiciel client (600) comporte un dispositif d'information (617) sur le fabricant du point d'accès (500) correspondant à au moins un réseau sans fil (400).

Par ailleurs, il est prévu un système de mise en oeuvre et de gestion de connexion(s) à au moins un réseau sans fil (400) pour des équipements de traitement de données (100), caractérisé en ce qu'il comprend au moins un module d'interconnexion (200), un logiciel (600), et une application (614) pour la désactivation/réactivation rapide de l'émission et de la réception de données par au moins un module d'interconnexion (200). Par exemple, il est prévu que ledit logiciel client (600) comporte un dispositif (615) d'économie d'énergie.

Les étapes sont exécutées automatiquement dans le procédé et le système.

Le procédé comprend l'utilisation de séquence(s) automatique(s), de dispositif d'assistance et d'aide à la décision. Le système comprend un module d'interconnexion au(x) réseaux sans fil, un logiciel contrôlant le module d'interconnexion et fournissant une interface à l'utilisateur, une base de données interrogeable par ce logiciel, et un dispositif de mémorisation des paramètres de réseaux sans fil.

Les points d'accès émettent périodiquement leur BSSID (Basic Service Set Identifier) qui est l'adresse MAC du point d'accès (pour mémoire, l'adresse MAC est unique à chaque matériel).

Le nom du réseau (SSID) peut être caché pour augmenter la sécurité du réseau (dans ce cas il n'est pas émis par le ou les point(s) d'accès à ce réseau). Par contre, le BSSID (adresse MAC) des points d'accès est toujours diffusé. Par conséquent, l'invention est particulièrement intéressante lorsque plusieurs réseaux sont détectés mais dont le nom (SSID) n'est pas émis. En effet, dans ce cas le BSSID (adresse MAC) du point d'accès permettra quand même d'identifier avec certitude le réseau désiré.

## Revendications

1. Procédé de mise en oeuvre d'une connexion pour un équipement de traitement de données (100) par au moins un module d'interconnexion (200) à au moins un réseau sans fil (400) comportant au moins un point (500) d'accès, dans lequel un système de balayage (206) du module d'interconnexion (200) détecte des premières informations émises par ledit au moins un point (500) d'accès,
**caractérisé en ce que** ledit procédé comprend en outre :
une identification du point d'accès auquel l'utilisateur souhaite se connecter, par recoupement, effectué par un dispositif d'assistance à la connexion (609), des premières informations détectées avec au moins une deuxième information de point d'accès de l'utilisateur, fournie au dispositif d'assistance à la connexion (609) par saisie par l'utilisateur de ladite deuxième information,
une sélection du point d'accès identifié en vue de la connexion du module d'interconnexion (200) au réseau par ce point d'accès sélectionné.

2. Procédé selon la revendication 1, **caractérisé en ce que** les premières informations émises par ledit au moins un point (500) d'accès contiennent des paramètres du réseau de ce point d'accès.

3. Procédé selon la revendication 1 ou 2, **caractérisé en ce que** les premières informations contiennent des informations d'identification du point d'accès les émettant.

4. Procédé selon l'une quelconque des revendications précédentes, **caractérisé en ce que** les premières informations émises par ledit au moins un point (500) d'accès contiennent l'adresse MAC du point d'accès les émettant.

5. Procédé selon l'une quelconque des revendications précédentes, **caractérisé en ce que** la deuxième information est des ou les caractères de l'adresse MAC du point d'accès de l'utilisateur.

6. Procédé selon l'une quelconque des revendications précédentes, **caractérisé en ce qu'**il comprend en outre une recherche d'une information de fabricant dans une base de données (700) à partir de paramètres du réseau auquel le module d'interconnexion est connecté et un affichage de cette information de fabricant.

7. Procédé selon la revendication 6, **caractérisé en ce que** les paramètres du réseau auquel le module d'interconnexion est connecté, par lesquels la recherche dans la base de données (700) est effectuée, comprennent les caractères de l'adresse MAC du point (500) d'accès auquel le module d'interconnexion est connecté.

8. Système de mise en oeuvre d'une connexion pour un équipement de traitement de données (100) par au moins un module d'interconnexion (200) à au moins un réseau sans fil (400) comportant au moins un point (500) d'accès,
le système comportant un système de balayage (206) pour détecter des premières informations émises par ledit au moins un point (500) d'accès,
**caractérisé en ce que** le système comporte un dispositif d'assistance à la connexion (609), pour saisie par l'utilisateur d'au moins une deuxième information de point d'accès de l'utilisateur, pour recoupement des premières informations détectées avec la deuxième information de point d'accès de l'utilisateur, de manière à identifier le point d'accès auquel l'utilisateur souhaite se connecter, et pour sélection du point d'accès identifié en vue de la connexion du module d'interconnexion (200) au réseau par ce point d'accès.

9. Système selon la revendication 8, **caractérisé en ce que** le dispositif d'assistance à la connexion (609) comporte une zone à remplir pour la saisie par l'utilisateur de ladite au moins une deuxième information de point d'accès de l'utilisateur.

10. Système selon la revendications 8 ou 9, **caractérisé en ce que** les premières informations émises par ledit au moins un point (500) d'accès contiennent l'adresse MAC du point d'accès les émettant.

11. Système selon l'une quelconque des revendications 8 à 10, **caractérisé en ce que** la deuxième information est des ou les caractères de l'adresse MAC du point d'accès de l'utilisateur.

12. Système selon l'une quelconque des revendications 8 à 11, **caractérisé en ce qu'**il comporte en outre une base (700) de données pour la recherche d'une information de fabricant à partir de paramètres du réseau auquel le module d'interconnexion est connecté et un dispositif (617) d'information pour l'affichage de cette information de fabricant.

13. Logiciel pour l'exécution du procédé selon l'une quelconque des revendications 1 à 7, comprenant des instructions pour la détection des premières informations émises par ledit au moins un point (500) d'accès, pour une identification du point d'accès auquel l'utilisateur souhaite se connecter, par recoupement des premières informations détectées avec la deuxième information de point d'accès de l'utilisateur, fournie par saisie par l'utilisateur de ladite deuxième information, et une sélection du point d'accès identifié en vue de la connexion du module d'interconnexion (200) au réseau par ce point d'accès sélectionné, lorsqu'il est exécuté sur un équipement de traitement de données (100).
